# FASCICULE DE BREVET EUROPEEN

(11) **EP 0 784 428 B1**
(45) Date de publication et mention de la délivrance du brevet: **05.01.2000**
(21) Numéro de dépôt: 95932791.7
(22) Date de dépôt: 26.09.1995
(51) Int. Cl.: A01N 35/02

(54) **PROCEDE DE LUTTE CONTRE LE POUVOIR ALLERGISANT DES ACARIENS DE LA POUSSIERE DE MAISON ET DE LEURS EXCREMENTS**
VERFAHREN ZUR BEKÄMPFUNG DER ALLERGISIERENDEN WIRKUNG VON HAUSSTAUBMILBEN UND IHRER EXKREMENTE
METHOD FOR CONTROLLING THE ALLERGENICITY OF HOUSE DUST MITES AND THEIR DEJECTA

(30) Priorité: 28.09.1994 FR 9411583
(43) Date de publication de la demande: 23.07.1997
(73) Titulaire: Laboratoires Arkomedika, 34730 Prades-le-Lez (FR)
(72) Inventeur: ROMBI, Max, F-06000 Nice (FR)
(74) Mandataire: Eidelsberg, Victor Albert
(86) Numéro de dépôt international: FR9501236
(87) Numéro de publication internationale: WO9609762

(56) Documents cités:
- EP-A- 0 451 800
- WO-A-89/12673
- CHEMICAL ABSTRACTS, vol. 119, no. 11, 13 Septembre 1993 Columbus, Ohio, US; abstract no. 115263, L.C.GRAMMER ET AL. 'Polymerisation and fractionation of house dust mite allergen' cité dans la demande & ALLERGY PROC., vol. 14, no. 3, 1993 pages 195-199,
- CHEMICAL ABSTRACTS, vol. 101, no. 17, 22 Octobre 1984 Columbus, Ohio, US; abstract no. 149601, W.F.GREEN 'Abolition of allergens by tannic acid' cité dans la demande & LANCET, vol. 2, no. 8395, 1984 page 160
- DATABASE WPI Week 9250 Derwent Publications Ltd., London, GB; AN 92-410101 [50] & JP,A,04 305 505 (NAKAMURA) , 28 Octobre 1992 cité dans la demande
- CHEMICAL ABSTRACTS, vol. 117, no. 13, 28 Septembre 1992 Columbus, Ohio, US; abstract no. 126468, cité dans la demande & JP,A,04 091 002 (HEISEI) 24 Mars 1992
- DATABASE WPI Week 9242 Derwent Publications Ltd., London, GB; AN 92-343786 [42] & JP,A,04 247 004 (FUMAKILLA) , 3 Septembre 1992 cité dans la demande
- CHEMICAL ABSTRACTS, vol. 120, no. 5, 31 Janvier 1994 Columbus, Ohio, US; abstract no. 48132, & CN,A,1 071 551 (ZHENNING FINE CHEMICALS PLANT, PEOP.REP.CHINA) 5 Mai 1993
- DATABASE WPI Week 9132 Derwent Publications Ltd., London, GB; AN 91-230573 [32] & CN,A,1 047 189 (WAN) , 28 Novembre 1990 cité dans la demande

## Description

De nombreux asthmatiques sont sensibilisés aux allergènes d'acariens qui provoquent également des rhinites allergiques et des dermatites atopiques.

Pour lutter contre les acariens de la poussière de maison qui font partie de la classe des Arachnides et qui comptent principalement trois familles, les Acaridae, les Glycyphagidae et les Pyroglyphidae, et notamment les genres Euroglyphus et Dermatophagoïdes, en particulier les espèces Dermatophagoïdes pteronyssinus et Dermatophagoïdes farinae, il est déjà connu d'utiliser un agent acaricide tel que l'hydroxy-benzoate de paraméthyle, la natamycine, des pyréthrinoïdes, des organophosphorés tels que notamment le pirimiphos méthyle, le benzoate de benzyle, etc.

L'utilisation d'acaricides vise à supprimer les organismes producteurs d'allergènes. Les acaricides n'agissent pas sur les allergènes déjà excrétés ou libérés par la mort des acariens. Pour inactiver les allergènes, on a proposé de dénaturer les antigènes des acariens, et c'est ainsi que DW.F. Green a proposé, dans un article paru au The Lancet le 21 juillet 1984, pages 160 et suivantes, d'utiliser l'acide tannique à cet effet, après avoir noté que des agents oxydants ou réducteurs, des cations, des agents alcalins, des aldéhydes et des acides doux n'ont pas d'effet sur les allergènes des acaricides de la poussière de la maison.

En contradiction avec cet état de la technique, on a maintenant trouvé qu'un aldéhyde bien particulier, à savoir le glutaraldéhyde, permet de lutter de manière efficace contre le pouvoir allergisant des acariens de la poussière de la maison et de leurs excréments.

Au Chemical Abstract, vol. 119, n°11, 13 septembre 1993 (abstract n°115263) et Allergy Proc volume 14, n°3 1993, pages 195-199, on décrit un procédé de préparation d'allergènes d'acariens destinés à être utilisés comme traitement en immunothérapie. Le procédé comporte les étapes suivantes : dégraissage des acariens à l'éther de pétrole, broyage, extraction aqueuse, lyophilisation, polymérisation avec une solution à 25 pour cent de glutaraldéhyde et séparation sur colonne pour séparer les allergènes. Ces allergènes polymérisés conservent leur caractère immunogène et antigénique mais leur allergénicité est réduite, ce qui permet d'envisager leur utilisation comme traitement désensibilisant. Les auteurs signalent que cette technique est tout à fait classique et avait été mise en oeuvre pour d'autres allergènes (plantes, pollen...).

L'invention vise à traiter l'environnement des personnes allergiques aux acariens, c'est-à-dire à traiter la poussière de maison contenant des acariens vivants, des acariens morts et aussi leurs déjections (ces dernières ayant un rôle important dans l'allergénicité liée à la présence des acariens). Cette utilisation est fondamentalement différente de celle décrite dans l'article de L.C. GRAMMER, mettant en oeuvre plusieurs étapes d'extraction et de fractionnement pour isoler une fraction polymérisée. D'autre part, il faut noter que cet article décrit une concentration de 25 pour cent en glutaraldéhyde, alors que l'invention met en oeuvre des concentrations variant entre 0,05 et 2 pour cent.

Enfin, alors que le procédé décrit par L.C. GRAMMER est destiné à fabriquer un médicament permettant de désensibiliser les patients, l'objet de l'invention est différent : il est de détruire les acariens grâce à un acaricide et de réduire le pouvoir allergisant de leur environnement (acariens morts et déjections) grâce au glutaraldéhyde.

L'article de L.C. GRAMMER indique que les allergènes sont polymérisés par le glutaraldéhyde ce qui conduit à une diminution de leur pouvoir allergénique. Cependant, il stipule clairement que cette méthode permet de conserver les antigènes. L'invention montre que, au contraire, la composition utilisée possède un effet de dénaturation des antigènes majeurs des acariens (Dermatophagoïdes pteronyssimus).

EP-A-0 451 800 (ABBOT LAB - 16.10.91) présente un procédé de fabrication d'un kit immunologique destiné à tester si un patient est allergique à une substance. L'objet de ce brevet est le procédé de fabrication du kit, c'est-à-dire la fixation sur un support, d'un allergène pré-traité par une substance dénaturante.

On notera,
que les allergènes des acariens sont cités au même titre que de nombreux autres allergènes (28 allergènes cités) tels que ceux du chat, de l'olive et de l'avoine.
qu'aucune spécificité particulière du glutaraldéhyde vis-à-vis des allergènes des acariens n'est signalée.
que ce brevet concerne le procédé de fabrication d'un instrument de diagnostic, alors que l'invention est en rapport avec le traitement de l'environnement de l'homme et des animaux.
que ce brevet ne décrit nullement les modalités et les conséquences immunologiques du traitement des acariens par les agents dénaturants.

DATABASE WPI - Derwent publications Ltd., London, GB; AN 92-410101 (50) concerne une formulation acaricide contenant du menthol, de l'alcool et optionnellement du glutaraldéhyde et une solution tampon.

On notera que :
les teneurs décrites en alcool et en glutaraldéhyde sont différentes de celles utilisées suivant l'invention.
la fonction anti-allergénique du glutaraldéhyde n'est absolument pas spécifiée.
même si cette formulation est destinée à un usage domestique, elle ne renferme pas de substance telle que les pyréthrinoïdes, dont le pouvoir acaricide est clairement démontré. En effet, l'activité acaricide de cette spécialité est très nettement inférieure à celle de la composition utilisée dans l'invention.

Ainsi, dans ce brevet, l'activité acaricide est de 79,8 pour cent à la dose de 100 ml/m² et de 33,5 pour cent à la dose de 10 ml/m².

L'activité de la composition suivant l'invention est bien supérieure : à la dose de 15 à 20 g/m², l'activité acaricide est de 100 pour cent pendant 120 jours.

JP-A-04 305 505 (NAKAMURA, 28 octobre 1992) concerne une formulation acaricide contenant en solution dans de l'alcool, du menthol, du camphre, de l'eugénol, des huiles d'eucalyptus et de menthe.

Hormis la présence d'alcool, il n'y a aucune relation entre la composition de l'invention et celle décrite dans ce brevet. De plus, l'objectif de la composition décrite dans ce brevet, tout comme dans le document précédent, est strictement limitée à l'activités acaricide, mais ne concerne pas la réduction du pouvoir allergénique des acariens et de leur environnement.

Au Chemical Abstract, vol. 117, n°13, 28 septembre 1992 (abstract n°126468) et JP-A-04 091 002 (HEISEI) 24 mars 1992, une préparation à visée acaricide est préparée par chauffage d'un mélange d'aldéhyde aliphatique avec un dérivé phénolique et un acide alkylbenzènesufonique, puis purification par distillation et enfin addition de dichloropyridazine, xylénol et nicotine.

La seule relation avec l'invention est la présence de glutaraldéhyde dans une préparation à visée acaricide.

Au DATABASE WPI Derwent publications Ltd., London, GB; AN 92-343786 (12) et JP-A-04 247 004 (FUMAKILLA), 3 septembre 1992, on décrit une préparation insecticide qui associe :
- un insecticide : un pyréthrinoïde
- une base parfumante constituée d'un extrait de plantes
- un composé fongicide ou bactéricide (le glutaraldéhyde est cité parmi une longue liste de substances)

Les avantages de cette préparation sont les suivants :
- le masquage de l'odeur des pyréthrinoïdes par l'extrait de plante,
- l'atténuation de l'odeur répulsive de l'insecticide pour les insectes,
- le masquage des mauvaises odeurs,
- la protection des pyréthrinoïdes contre la lumière et l'oxydation,
- la prévention des odeurs de décomposition des substances organiques (insectes morts) grâce aux agents fongicides et/ou bactéricides.

Ce document est muet sur une activité anti-allergénique.

Au Chemical Abstract, vol. 120, n°5, 31 janvier 1994 (abstract n°48132) et CN-A-1 071 551 (ZHENNING FINE CHEMICALS PLANT, PEOP. REP. CHINA) 5 mai 1993, on décrit la composition suivante : tétraméthrine, polyamide, polyéthylène glycol, glutaraldéhyde, pentachlorophénol, solvant organique et parfum, comme ayant une activité insecticide et anti-mite. Aucune activité sur les acariens et a fortiori sur la réduction de leur pouvoir allergénique par le glutaraldéhyde n'est évoquée.

La formulation décrite au DATABASE WPI Derwen publications Ltd., London, GB; AN 91-230573 (32) et CN-A-1 047 189 (WAN) 28 novembre 1990 renferme du gluconate de chlorhexidine, du benzalkonium ou du glutaraldéhyde et une plante chinoise "à action lente". L'activité revendiquée concerne les moustiques, les mouches et leurs larves.

Aucune activité sur les acariens et a fortiori sur la réduction de leur pouvoir allergénique par le glutaraldéhyde n'est évoquée.

La préparation acaricide détergente décrite dans WO-A-89 12673 (WAX APPLIANCES LTD) 28 décembre 1989, renferme des dérivés de glycols, des alcools, des amines, des surfactants. Cette formulation de base peut être complétée par l'addition d'autres substances telles que des aldéhydes parmi lesquels le glutaraldéhyde.

Aucune activité sur la réduction du pouvoir allergénique des acariens et de leur environnement due au glutaraldéhyde n'est évoquée.

Au Chemical Abstract, vol. 101, n°17, 22 octobre 1984 (abstract n°149601), on décrit que le traitement des acariens et de certaines plantes allergisantes (plantain ...) par une solution à 1 pour cent d'acide tannique, supprime leur allergénicité. Les auteurs recommandent de traiter l'environnement par une telle solution.

Cette activité est similaire à celle préconisée pour le glutaraldéhyde dans l'invention, mais ne fait pas référence à cette molécule.

Suivant l'invention, on peut avoir recours à une composition acaricide comprenant en poids de 0,05 à 2% de glutaraldéhyde, de 0,1 à 5% d'agents acaricides, notamment de pyréthrinoïdes tels que alléthrine, nesméthrine, perméthrine, fenvalénate, cyperméthrine, deltaméthrine et de 95 à 99% d'un solvant organique volatil ou autre excipient, notamment d'un alcool tel que l'éthanol ou l'isopropanol, avec une préférence pour l'éthanol ou un dérivé du pétrole, par exemple d'un éther de pétrole.

La composition suivant l'invention peut comporter également de 0,05 à 1% en poids de régulateurs de croissance, tels qu'une benzoylphénylurée, comme le Diflubenzuron, le Lufénuron, le Flufenoxuron, l'Hexaflumuron, qui inhibent la synthèse de la chitine et de la cyromazine et/ou des régulateurs de croissance qui simulent l'action des hormones juvéniles et empêchent l'éclosion des oeufs ou la transformation de la larve en nymphe, dont les principaux sont le Fenoxycarb, le Méthoprène, le farnésol et ses dérivés l'Hydroprène et le Pyriproxifène.

Pour obtenir des résultats satisfaisants, on applique ou on pulvérise une composition suivant l'invention sur les matelas, les tapis, les tentures, la literie et autres surfaces avec lesquelles l'homme vient en contact, à raison de 5 à 25 g par m².

Les exemples suivant illustrent l'invention :
Exemple n° 1
   On mélange 10 g de permethrine 40/60 et 2 g de farnésol à 983 g d'éthanol à 99%. Puis on y ajoute 5 g d'une solution de glutaraldéhyde à 25%.
   On pulvérise la solution ainsi obtenue par une pompe distribuant un volume de 0,13 ml par course du piston sur une culture d'acariens des poussières répandue sur 0,02 m². L'effet léthal est de 100% pendant 3 mois, malgré un réensemencement des acariens tous les mois.
Exemple n° 2
   L'efficacité du produit a été testée en simple aveugle dans 5 foyers dans lesquels vivent des sujets allergiques aux acariens (4 foyers avec des enfants allergiques âgés de 3 à 12 ans et 1 foyer avec un adulte de 35 ans). Dans chaque habitation est appliquée dans un premier temps, la formulation décrite dans l'exemple n°1, mais sans glutaraldéhyde. Un mois plus tard, le traitement est renouvelé avec la même formulation contenant le glutaraldéhyde. Les réactions allergiques (larmoiements, éternuements, rhinites, crises d'asthme...) sont objectivées pendant le mois qui suit chaque traitement.
   A l'interrogation, les sujets allergiques ou leur famille ont déclaré que le deuxième traitement était le plus efficace.
   Ils ont constaté que les réactions allergiques étaient moins fréquentes: diminution des larmoiements, des éternuements, du nombre de rhinites, voire des crises d'asthme.
   Ces résultats montrent que l'ajout de glutaraldéhyde par son action dénaturante des antigènes des acariens de la poussière de maison, complète l'action acaricide des pyréthrinoïdes; ce qui justifie son utilisation dans le traitement de l'environnement du sujet allergique.
Exemple n° 3
   On étudie si la solution acaricide conformer à l'exemple 1 et/ou le glutaraldéhyde en solution aqueuse à la même concentration que dans la solution acaricide ont une action dénaturante sur les antigènes majeurs Der p 1 et Der p 2.
   La procédure utilisée est celle décrite par LUCZYNSKA et coll. (J. Immunol Method, 1989, 118, 227-235).
   Un effet de dénaturation des antigènes majeurs Der p 1 et Der p 2 est obtenu avec la solution acaricide et avec le glutaraldéhyde. Cette dénaturation augmente linéairement avec la concentration de produit acaricide et/ou glutaraldéhyde (dilutions comprises entre 1/8ème et 1/2).
   L'intensité de la dénaturation est similaire quel que soit l'antigène.
Exemple n°4
   L'objet de cette étude est d'évaluer l'efficacité d'une formule acaricide conforme à l'exemple sur un acarien de poussière de maison, (Dermatophagoïdes farinae), en comparaison avec un produit de référence (Acardusi®).
   Cette recherche est effectuée par traitement de supports en tissu sur lesquels sont déposés les acariens dont on enregistre la mortalité. Un support non traité est utilisé comme référence.
   Le traitement est effectué aux doses suivantes : 5,15 et 25 g/m².
   Des réinfestation régulières (30 ; 45 ; 60 ; 90 et 120 jours) renseignent sur la persistance de l'activité.
   A la dose de 5 g/m2, l'activité acaricide est de 100 pour cent jusqu'au 90ème jour, puis commence à diminuer.
   A la dose de 15 à 25 g/m2, l'activité acaricide de 100 pour cent persiste jusqu'au 120ème jour.
   Ces résultats sont équivalents à ceux obtenus avec le produit de référence à la dose de 20 et 55 g/m2.

## Revendications

1. L'utilisation du glutaraldéhyde comme agent actif pour dénaturer les antigènes des acariens de la poussière de maison et de leurs excréments.

2. Procédé pour dénaturer les antigènes des acariens de la poussière de maison et de leurs excréments, caractérisé en ce qu'il consiste à appliquer ou à pulvériser sur la literie, les revêtements de sol ou autre environnement de l'homme, une composition comprenant de 0,05 à 2% de glutaraldéhyde et de 0,1 à 3% d'agent acaricide dans un solvant organique ou autre excipient.

3. Procédé suivant la revendication 2, caractérisé en ce qu'il consiste à appliquer ou à pulvériser de 5 à 25 g de la composition par m2.

4. Procédé suivant la revendication 2, caractérisé en ce que l'acaricide est un pyréthrinoïde.

5. Procédé suivant la revendication 2, caractérisé en ce que le solvant est l'éthanol.

6. Procédé suivant la revendication 2, caractérisé en ce que la composition comprend en poids de 0,005 à 1% d'un régulateur de croissance.

## Claims

1. The use of glutaraldehyde as an active agent for denaturing the antigens of house dust mites and their excrement.

2. Process for denaturing the antigens of house dust mite and their excrement, characterised in that it comprises applying or spraying a composition containing 0.05 to 2% of glutaraldehyde and 0.1 to 3% of acaricidal agent in an organic solvent or other excipient onto bedding, floor coverings or other human environments.

3. Process according to claim 2, characterised in that it comprises applying or spraying 5 to 25 g of the composition per m².

4. Process according to claim 2, characterised in that the acaricide is a pyrethrinoid.

5. Process according to claim 2, characterised in that the solvent is ethanol.

6. Process according to claim 2, characterised in that the composition contains 0.005 to 1% by weight of a growth regulator.

## Patentansprüche

1. Verwendung von Glutaraldehyd als Wirkstoff zur Denaturierung der Antigene von Hausstaubmilben und ihrer Exkremente.

2. Verfahren zur Denaturierung der Antigene der Hausstaubmilben und ihrer Ekremente,
dadurch gekennzeichnet, dass
eine Zusammensetzung enthaltend 0,05 bis 2 % Glutaraldehyd und 0,1 bis 3 % milbentötendes Mittel in einem organischen Lösungsmittel oder einem anderen Träger auf Bettzeug, Bodenbeläge oder anderer menschlicher Umgebung aufgetragen oder aufgesprüht wird.

3. Verfahren nach Anspruch 2,
dadurch gekennzeichnet, dass
pro Quadratmeter 5 bis 25 g Zusammensetzung aufgetragen oder aufgesprüht werden.

4. Verfahren nach Anspruch 2,
dadurch gekennzeichnet, dass
das milbentötende Mittel ein Pyrethrionoid ist.

5. Verfahren nach Anspruch 2,
dadurch gekennzeichnet, dass
das Lösungsmittel Ethanol ist.

6. Verfahren nach Anspruch 2,
dadurch gekennzeichnet, dass
die Zusammensetzung zusätzlich 0,005 bis 1 Gew.-% Wachstumsregulator enthält.
